# EUROPEAN PATENT APPLICATION

(11) **EP 2 328 049 A1**
(43) Date of publication of application: **01.06.2011**
(21) Application number: 09176694.9
(22) Date of filing: 20.11.2009
(51) Int. Cl.: G05B 19/042, H04L 12/28

(54) **A system for controlling environmental conditions of a building**

(71) Applicant: Zerogroup Holding OÜ, 51003 Tartu (EE)
(72) Inventor: Vimberg, Priit, 10915 Tallinn (EE); Raestik, Raivo, 11913 Tallinn (EE)
(74) Representative: Kupiainen, Juhani Kalervo

(57) **Abstract**

The invention relates to a control system for controlling environmental conditions of a building. The control system comprises a server used for accessing external services through a communication network, such as the Internet. The control system comprises controllers for controlling environmental equipment based on sensor signals. The controllers are used for relaying communication between the server and user interface means in the usage of external services.

## Description

### TECHNICAL FIELD OF THE INVENTION

The present invention relates to a control system. The invention especially relates to control systems for controlling environmental conditions in a building. The environmental conditions may relate e.g. temperature, humidity, CO₂ level, electricity, access rules, water supply, and lighting, for example.

### BACKGROUND OF THE INVENTION

In order to save energy and to improve living environment in buildings, there are control systems for adjusting heating, air conditioning, and possibly lighting, for example. In order to achieve optimised use of energy a control system requires sufficient processing capacity, sensors for sensing required magnitudes in the building, equipment for heating, lighting, air conditioning etc, as well as control panels for providing a user interface for the user. Further, there are separate systems for security purposes. Such systems are often complicated and costly, but due to the improved energy efficiency, living environment and security such an investment is commonly worthwhile.

There are also many other systems at homes, especially for communications purposes. Such systems include telephones, mobile phones and personal computers with internet communication capabilities. Such communication equipment can be used for ordering products and services, for example. Such services may include ordering meals from a restaurant to home, ordering a flight ticket, or ordering a movie. Such ordering, however, requires contact information of the service providers, selection of a service provider, registration to the service, selecting from service alternatives, and filling much information into the service web pages for the authentication of the user, for checking the creditworthiness of the user, and delivery information for the ordered service.

### SUMMARY OF THE INVENTION

An object of the invention is to alleviate the problems and disadvantages relating to the known prior art solution. Especially the object is to allow increasing users' comfort and quality of life, saving energy, and allowing the use of external services with a quick and easy to use interface.

At least a part of the objects of the invention is achieved by the present inventive control system for controlling environmental conditions and/or security. In the inventive solution, the control system includes a server which has communication capabilities in the Internet, for example. The user can make orders for products or services by using the user interface of the control system and communicating through the server of the control system with online Internet services of the external service providers, such as restaurants.

Control system according to the invention for controlling environmental conditions of a building, which control system comprises sensors for sensing conditions in the building, user input means inputting control commands to the system, processing means for controlling equipments of the building on the basis of the user commands and the data received from the sensors, and user output means for providing information on the system for the user, is characterized in that the control system comprises a server which is directly or indirectly in connection with the user interface, and the server has a communication capability through a communication network with external servers, whereby the server is adapted to provide access to external services of the external servers via the user interface.

Inventive controller of a control system of a building, comprising means to receive measurement information concerning the environmental conditions in the building, means for controlling equipment in the building in order to achieve target environmental conditions, connection to user interface means for inputting control commands and outputting measurement/control information of the control system, is characterized in that the controller has a communication interface for a server, and the controller has means for relaying communication between the server and the user interface means for using external services via the user interface means.

Inventive computer program product for a control system for adjusting environmental conditions of a building is characterized in that the program is also adapted to provide communication with external servers through a communication network in order to provide external services for a user of the control system.

In one embodiment of the invention the control system comprises one or several controllers, which are adapted to receive measurement information from sensors of the system, and to control the equipments of the control system. User interface means of the system, such as a control panel, and the server may also be connected to a controller, whereby the controller serves to relay information communication between the user interface and the server, especially in relation to using external services.

In a preferable embodiment the user interface means comprises a touch screen as an input and output means of information. Such a touch screen is convenient for the usage of the external services, whereby it is possible to provide a screen for the user, which screen may include easy to use selection menus.

In one embodiment of the invention the system includes a software application for the usage of the external services. Such an application may be administered by a third party, which may provide a convenient selection of external services by external service providers. The server may also include information storage for storing user information, or information concerning a third party. Such stored information can be used for accessing the services, and automatically providing delivery address etc. information for the external service provider when the user makes an order, for example.

The server of the control system may be installed in the same premises, the environmental conditions of which are controlled by the control system. It is also possible that the server is located in some separate building. For example, the server may be provided by a third party, and such a third party may administer several servers of several control systems, or a same server may be used for several control systems. A system may automatically include and control many buildings and their environments, regardless of their geographical location.

It is also possible that the server functionality is a part of a controller of a control system, so it is possible to implement the present invention without separate server equipment. On the other hand, it is also possible to use a separate server for providing the functionalities of a controller in the control system. Therefore, the terms "server" and "controller" mean functionalities in this patent applications rather than specific/separate physical devices.

The control system may preferably use presence information as an input in the environmental controls. The general or identified presence information may be composed for example by measuring means, such as for example modules having some presence indicator, such as an IR and/or CO₂ detector or motion detector, camera, or other detector or sensor applicable for detecting presence known by the skilled person. It is also possible to use access control equipments for providing the presence information of people. Such access information equipments may be part of the system. The presence information used for the system controls may thus be identified presence information, including the identity information of the person/people who is/are present in the room/entity or other determined premises. Thus it is possible to use the identity information for the environmental controls and predict locations of a certain person/user.

It is possible to achieve substantive advantages with the present invention. A control system of a building is always in a running state, and user interface of the system is easily available. It is not necessary to start any computer and communications/browser programs for accessing services. Therefore, it is quick and easy to use external services like ordering a pizza or products from a shop. Also, when the service providers are readily selected in the server, and their contact and service information stored in the server, it is not necessary to use time for searching and selecting suitable service providers, nor searching their contact information.

It is also easy to make orders from the external services when e.g. access information, user information and delivery information are readily stored in the server.

The present invention also allows an easy access to online services for those people who do not otherwise use the Internet at home. For such people, the invention allows the access to services without need to learn pc technology or the use of browser programs, for example.

The external services may include most types of online services which are available through the Internet. They may include, for example, weather forecasts, selected news, ordering taxi, video rentals, etc.

The entities where the invention can be used may be naturally private houses, but also office buildings, factories, warehouses, schools, hospitals, museums etc.

The exemplary embodiments of the invention presented in this document are not to be interpreted to pose limitations to the applicability of the appended claims. The verb "to comprise" is used in this document as an open limitation that does not exclude the existence of also unrecited features. The features recited in depending claims are mutually freely combinable unless otherwise explicitly stated.

### BRIEF DESCRIPTION OF THE DRAWINGS

Next the invention will be described in greater detail with reference to exemplary embodiments in accordance with the accompanying drawings, in which
- Figure 1: illustrates an exemplary block diagram of a system according to an embodiment of the invention, and
- Figure 2: illustrates an exemplary apartment, where a control system according to the invention is used for controlling environmental conditions and accessing external services.

### DETAILED DESCRIPTION

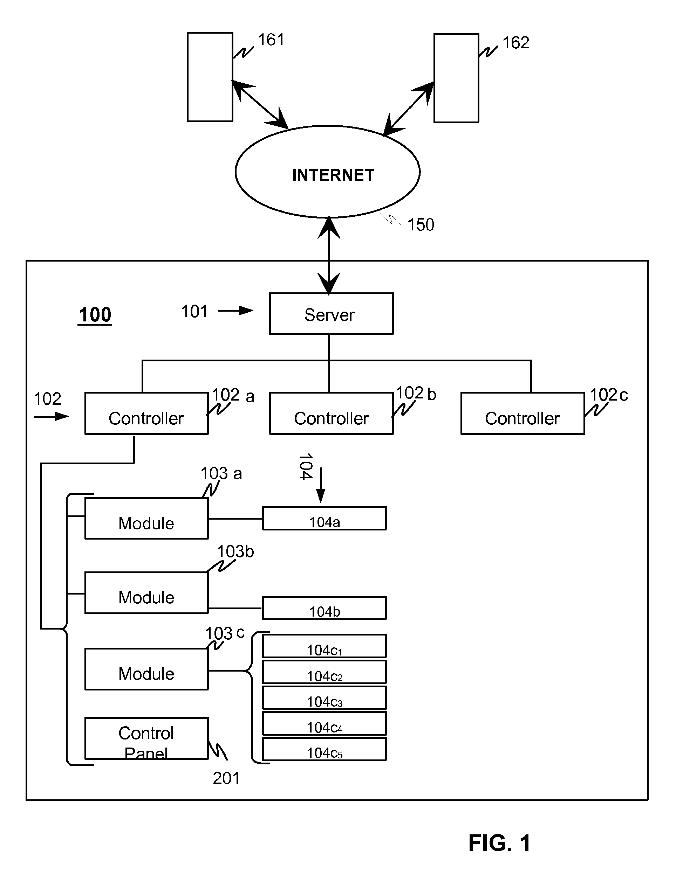

Figure 1 illustrates a block diagram of an exemplary control system 100 according to the invention. The system advantageously comprises three layers, namely a controller layer having controlling means or shortly controllers 102, a module layer having modules 103, and a server layer 101.

The server 101 is in connection with a communications network such as the Internet 150. Thus the server has access to external servers 161, 162 which provide external services.

According to an embodiment one controller 102a is advantageously related to one entity, such as an apartment, home, business office, factory or logistics warehouse. The controller 102 is a central hub communicating from one side with different kinds of modules e.g. through RS485 lines and from the other side with other controllers 102a, 102b, 102c located e.g. in different entities. The controllers 102 are in a data connection also with the server 101 e.g. through a data communication system, such as the Internet.

The controller 102 may initiate a connection with the server after powering it up. A unique ID and security certificate may be checked by the server during the connection set-up, and the controller may also check the server's security certificate. If the unique ID and all certificates match, a secure communication channel is established. The communication between the controller 102 and server 101 is advantageously encrypted and therefore the public Internet can be used for data transmission. Each controller has a unique ID and advantageously also a security certificate.

As discussed earlier the controller 102a may be in data connection with modules and user interface units, such as for example with an access control module 103a, security module 103b, I/O module 103c or control panel 201. In addition the modules are in a data connection with different kinds of equipments 104 and/or sensors, such as the access control module 103a may be in data connection with the access managing equipment 104a, like a door sensor (sensing whether the door is open or closed so the equipment may also be in a simplest mode a sensor sensing some environmental condition), electric lock of the door (opening and closing the lock), a buzzer, open button, and key or ID reader. The security module 103b may be in data connection with a security sensor equipment 104b having e.g. input, such as a PIN code reader. The I/O module 103c may be adapted to sent operating signals e.g. to a heating means 104c₁, cooling means 104c₂, ventilation means 104c₃, lighting means 104c₄, means for affecting humidity 104c₅, and sprinkler system. The control panel 201 is adapted to gathering or receiving measuring signals from the sensors of the control panel. said measuring signals indicating e.g. information relating to the environmental conditions of the entity, such as temperature, humidity and CO₂ level. The control panel also serves as user interface with a touch screen and display, for example.

According to the invention, the user may access external services through the control system. The user interface, such as a control panel 201, may serve as a terminal of the server in using the external services. The control panel is preferably connected to a controller 102a of the control system, whereby the controller relays the communication between the server 101 and the control panel. Alternatively, the control panel may have a separate connection to the server for the purpose of providing the user interface for the external services.

The controller has advantageously access to information related to the desired and/or measured environmental conditions, such as climate and lighting, access rules, security and remote metering. Said information related to the environmental conditions may be e.g. temperatures, humidity values, CO₂-levels, lighting conditions and security details when the entity to which the controller relates is either occupied or non-occupied and/or in some other state, such as for example in a fire situation or under a chancing weather condition. Temperature may be set e.g. lower for the non-occupied entity than for occupied entity, as well as a sprinkler system may be activated in a fire situation and message sent to the fire station.

According to an embodiment information related especially to desired environmental conditions is advantageously locally stored in the controller, which allows for autonomic work also in case of Internet connection loss. All data may be stored locally. According to an embodiment it can also be sent to the server after the Internet connection is restored.

The modules may also be adapted to gather measuring information advantageously from the equipments, such as from heating means 104c_{1,} cooling means 104c₂, ventilation means 104c₃, lighting means 104c₄, means for affecting humidity 104c₅ and sprinkler system. The measuring information may indicate for example current operating status of the equipment. Control panels and modules are advantageously adapted to send said information to the corresponding controller or the controller is adapted to read said information from the control panels / modules.

The controller 102a is adapted to determine measuring information gathered from the sensors which may be located in the control panels 201, equipments 104, or they may be separately installed through a sensor module. Based on the measuring information as well as information related to desired environmental conditions and/or rules input by the user determined and sent a control signal to at least one module being in a data connection with the corresponding equipment used for controlling the environmental condition of said entity.

The server 101 may provide analysing measuring information and determining control signal to be fed into the modules. The server is also typically used to control decisions beyond the reach of the controller due to the complexity of the rules or because of rules relating to signals from modules connected to different controllers.

Also, different signals and messages to and from outside the system 100 are advantageously handled by the server, such as for example information related to weather forecast, traffic jams, and tariff and/or prediction of the energy and water costs, as well as also other information related to environmental conditions outside the entities. For example if the server is provided with weather forecast information forecasting cooler weather for a certain area, the server may determine and sent a signal to the controllers located in said area in order to take into account the changing weather conditions. The server may even calculate, taking into account the energy prizes, such as night-rate, the cheapest time for pre-heating the entities in said area, and sent signal indicating the optimal time window to the appropriate controllers.

The server may be adapted to allow web-based system set-up and management, as well as to control logging of events so that all events are logged e.g. in the server SQL database and are accessible to queries e.g. from authorized outside applications (management tools). In addition the controller controlling and monitoring modules' status may send data to the server, where data may be stored e.g. an SQL database, as well as also processed and analysed and taken into account when determining control signals to the controllers. Furthermore the server may be used to manage configurations and updating the controllers' logic and/or software.

The system may utilize neural network and self-learning algorithms, such as learning inertia of the entity relating e.g. to cooling or heating. The learning may be continuous learning, where the system updates its learning every time when the environment condition must be changed, for example taking into account also the current weather (wind, sunny, humidity and outdoor temperature, for example) when changing the entity's temperature and/or humidity, for example. This kind of advanced control functions are conveniently run in the server.

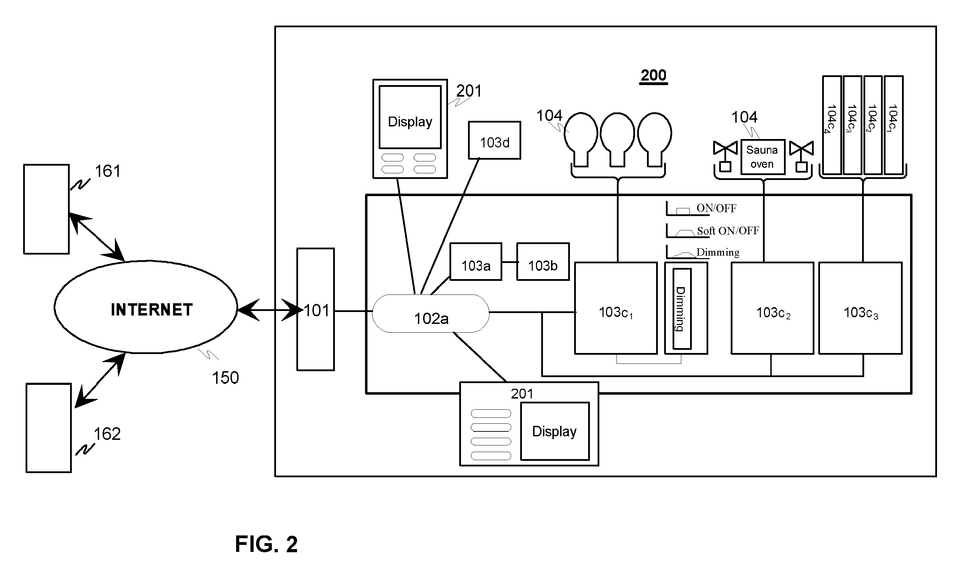

Figure 2 illustrates an exemplary single apartment 200, where the system, such as the system 100, is used for controlling the environmental conditions and providing access to external services, according to an embodiment of the invention. The hierarchy of the components, such as controllers 102 (i.e. controlling means), control panels 201, modules 103 and equipments 104, as well as the server 101, is advantageously similar as described in connection with the figure 1. The server has a connection to a communications network 150, such as the Internet. The server has thus access to external servers 161, 162, providing external services.

Control panels 201 are in a data connection with the controller responsible of controlling the environmental conditions of said entity 200. The control panel 201 is used e.g. for inputting control parameters for desired environmental conditions, but it can be used also for informing the user e.g. about the current environmental conditions of the entity, energy consumption and maintenance costs. According to the invention, the control panels may also be used as a user interface for accessing and using external services 161, 162 through the server 101. Thus it may be used e.g. for displaying information transferred from the outside of the entity 200, such as for example weather forecast information or outside environmental information sent by the server, as well as information about services of the service providers for making service orders.

The user interface means 201 such as a control panel can be implemented e.g. by a touch screen. It should be noted that there may be numbers of user interface means 201 in the same entity, such as one on the first floor and the other on the second floor. According to an embodiment an LCD keypad may be installed e.g. in the garage instead of a costly touch screen. In addition an infrared module 103d (or other module able to a wireless communicating) may also be installed nearby the garage, so that the user may control for example the function of garage door by the remote controller. It should be noticed that also information from these control panels are used for example for controlling the environmental condition inside the apartment 200, such as for example when the user is arrived in the garage, the lighting and air ventilation may be switched into the occupied mode. The usage of several control panels also allows an easy access to external services from different parts of the building.

It should be noticed that the control panel may be web-based and accessible from a computer or hand-held device, like devices connected to LAN or to the Internet. The control panel may also be used for real time system monitoring and controlling e.g. via the touch screen, computer or hand-held device, such as smart phone, as well as overall managements, such as managing users / access control rules, viewing logs, work time and security areas status, arming/disarming etc.

The system 100 may be used at the entity 200 for controlling the same exemplary environmental conditions as described elsewhere in this document. The controller 102a is used at the entity 200 for example controlling access and security means via the access control module 103a and security module 103b, respectively. In addition the controller 102a communicates with the I/O module 103c₁ to control lighting conditions (illuminators and lamps 104c₄, for example), and the I/O module 103c₂ to control the heating of a sauna (oven, heat collector, taps, water valves in the sauna), as well as the I/O module 103c₃ to control air condition, such as a heating means 104c_{1,} cooling means 104c₂, ventilation means 104c₃, and/or means for affecting humidity 104c₅.

Also lighting control of the apartment 200 is one of the environmental conditions controlled easily by the control system. Lighting can be controlled according to the security of the building as well as by people's movement. For example, when the security system is switched off in the dark, sufficient lighting will be automatically switched on, as well as office rooms are lighted in accordance with the people arriving in rooms. The system 100 may also be adapted to switch off the lighting when people leave the rooms. Relevant information is obtained from the equipments and measuring devices of the control panels, such as from access control means, motion detectors and/or CO₂ level detector, for example. The required illuminance conditions can be achieved by using the feedback information from the light sensors for controlling the lighting equipments. It is also possible to use self learning neural network for controlling lighting, whereby the system may learn which amount of light is required inside the building in e.g. different levels of light outside the building.

The control system may be adapted to control a building's lighting, heating etc. according to the people's general or identified presence, date and time, and also inside/outside illuminance conditions, room by room, whereupon it is possible to achieve up to 44% energy savings on lighting by combining only these three control methods. It should be noted that the presence-based lighting control offers savings, but also comfort simultaneously. Forgotten lights can be totally/partly switched off or the power can be reduced to increase savings if there has been no movement in a room for a certain time. Identified movements and automatically switched on lights make living more comfortable. Especially, if identified presence information is used it is possible to control the environment according to the personal preferences of each person. It is important to note that no special additional motion detectors are needed, because the system may use the same motion detectors for both environmental control and security system.

When identified presence information is used in the system, this makes the system capable to personal/identified control of the environment. The system thus has the information on the person who is actually in a certain room or other premises. This way the settings of the control system can be fitted to suit those people and their preferences which are stated in the system. With the identified presence information the system can predict lighting and other environmental conditions needed in particular parts of the building and/or buildings.

The system 100 of the invention may also manage an alarm system of the apartment 200 e.g. by providing alarm and identified presence information to security companies, customers and other appropriate parts, such as lighting and climate control. According to an embodiment of the invention there's no need to integrate the system 100 into a separate alarm system, but all connections e.g. to lighting and climate control are handled by the software run at/by the server. The configuration of the function can be done simples just by defining rules. The system 100 may make an alarm to an appropriate party for example if there is a burglar, fire, panic or tampering or forced opening in the entity, or if some climate conditions indicating value (such as temperature, humidity, CO₂ level) exceeds the allowed range.

Furthermore the system 100 of the invention may also manage an access control of the apartment 200 e.g. by providing identified presence and location information for registering people's movements and using said information for controlling e.g. lighting and climate. Thus it is possible to provide an integrated, multi-purpose control system, which provides environmental control, access/security functions as well as access to external services.

Also an intercom means can be incorporated into the system 100 used in the apartment 200. An audio/video intercom function may be combined e.g. with a VoIP (Voice over IP) technology-based voice system and a surveillance camera-based video system. The controller 102a or server (if used) comprises a VoIP gateway so that video pictures from the (video) security system and voice signals from outside are combined and shown on the user interface means, such as via a touch screen and on a web browser. According to an exemplary scenario of the invention a guest may dial the phone number of the apartment/house, whereupon the controller 102a receives a signal, switches the touch screen picture to a preconfigured surveillance camera and plays a doorbell melody on a loudspeaker. The user may answer the call, cancel the call or let the guest in at once without answering the call. Video messages may be available for leaving messages if people are not home.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

For example, it should be noted that just a few examples of control systems have been described above, while the invention is not restricted to any specific type of environmental controls or any specific hierarchy of the control system. As an example, it is possible to provide the server functionality in a controller unit, or it is possible to provide controller functionality in a server equipment.

## Claims

1. Control system for controlling environmental conditions of a building, which control system comprises sensors for sensing conditions in the building, user input means for inputting control commands to the system, processing means for controlling equipments of the building on the basis of the user commands and the data received from the sensors, and user output means for providing information on the system for the user, **characterized in that** the control system comprises a server which is directly or indirectly in connection with the user interface, and the server has a communication capability through a communication network with external servers, whereby the server is adapted to provide access to external services of the external servers via the user interface.

2. Control system according to claim 1, **characterized in that** the user interface is a control panel, whereby the user output means and the user input means are implemented with a touch screen.

3. Control system according to claim 1 or 2, **characterized in that** the server of the system has a storage for storing user information, and the server is adapted to using said information for accessing and/or ordering services of an external server of an external service provider.

4. Control system according to any of the previous claims, **characterized in that** the server of the system includes a software application for the usage of the external services.

5. Control system according to claim 1, **characterized in that** said software application is administered by a third party, which has an access to provide maintenance of the software application.

6. Control system according to any of the previous claims, **characterized in that** said server is installed in the building, the environmental conditions of which are controlled by the control system.

7. Control system according to claim 5, **characterized in that** said server is installed to premises of the third party.

8. Control system according to claim 1, **characterized in that** it is administered by a third party, which has an access to provide maintenance for the control system.

9. Control system according to any of the previous claims, **characterized in that** the control system comprises one or several controllers for controlling equipments of the control system, whereby the server and the user interface means of the control system are connected to a controller, and the controller is adapted to relay communication relating to the usage of the external services between the server of the sytem and the user interface means.

10. Controller of a control system of a building, comprising means to receive measurement information concerning the environmental conditions in the building, means for controlling equipment in the building in order to achieve target environmental conditions, connection to user interface means for inputting control commands and outputting measurement/control information of the control system, **characterized in that** the controller has a communication interface for a server, and the controller has means for relaying communication between the server and the user interface means for using external services via the user interface means.

11. Computer program product for a control system for adjusting environmental conditions of a building, **characterized in that** the program is also adapted to provide communication with external servers through a communication network in order to provide external services for a user of the control system.
